# EUROPEAN PATENT SPECIFICATION

(11) **EP 0 410 546 B1**
(45) Date of publication and mention of the grant of the patent: **21.12.1994**
(21) Application number: 90202071.8
(22) Date of filing: 27.07.1990
(51) Int. Cl.: C08F 8/32

(54) **Functionalized elastomeric polymers**
Funktionalisierte Elastomer-Polymere
Polymères élastomères fonctionnalisés

(30) Priority: 28.07.1989 US 386096
(43) Date of publication of application: 30.01.1991
(73) Proprietor: SHELL INTERNATIONALE RESEARCH MAATSCHAPPIJ B.V., 2596 HR Den Haag (NL)
(72) Inventor: Wong, Pui Kwan, Katy, Texas 77540 (US)

(56) References cited:
- EP-A- 0 215 501
- EP-A- 0 378 849
- FR-A- 2 298 559
- US-A- 3 208 981

## Description

This invention relates to certain functionalized elastomeric polymers and to a process for preparing such polymers. More particularly, the invention relates to elastomeric polymers functionalized by the presence therein of pendant oxazolinyl groups.

Elastomeric polymers, both homopolymers and copolymers, are well known in the art and include natural rubber and a wide variety of synthetic elastomeric materials. One class of synthetic elastomeric polymers includes homopolymers such as polybutadiene, polyisoprene and polychloroprene. A second class of such elastomeric copolymers which is common in the art and in commerce is referred to as ethylene-propylene-diene monomer elastomers (EPDM). These EPDM elastomers are particularly useful elastomers since they are produced from relatively low cost materials and have good mechanical and elastomeric properties as well as resistance to thermal and chemical degradation. Yet another class of particularly useful elastomeric copolymers is the class of thermoplastic elastomers which demonstrate elastomeric properties at ambient temperatures but which are processable by methods conventional for non-elastomeric thermoplastics at somewhat elevated temperatures. Such thermoplastic elastomers are illustrated by block copolymers of a vinyl aromatic compound and a conjugated alkadiene, for example, a block copolymer of styrene and butadiene. The properties of such block copolymers are improved for many applications by the hydrogenation of some or all of the unsaturation in the polyalkadiene or aliphatic portion and, on occasion, the poly(vinyl aromatic compound) or aromatic portion.

Further, non-flexible polymers are known. In US-A-3,208,981 it is described that a more flexible polymer can be obtained by preparing copolymers comprising 20-85% styrene, 10-75% unsaturated esters and 1-15% of an unsaturated acid, reacting the copolymers with a compound containing an amino group and at least one hydroxy group and converting resulting amide groups to oxazolino groups.

It is known that the properties of many elastomeric polymers are often modified by "curing" or cross-linking the polymer, typically by adding a cross-linking or curing agent and maintaining the resulting mixture at an elevated temperature. Cross-linking of natural rubber by heating with sulphur or a sulphur-containing compound is the commercial vulcanization needed to make the rubber suitable for many commercial applications. Other types of curing are available, as by heating with peroxides, for example. The resulting cured products are crosslinked polymers exhibiting good properties of dimensional stability and solvent resistance. It would be of advantage to provide a novel class of curable elastomeric polymers, that is, functionalized elastomeric polymers which are curable by heating with common curing agents to produce useful cured products.

The novel functionalized elastomeric polymers of the present invention are a natural rubber, polybutadiene, polyisoprene, polychloroprene, an EPDM rubber or a block copolymer of a vinyl aromatic compound and a conjugated alkadiene, which elastomeric polymers contain pending 2-oxazolinyl groups. Specifically, the functionalized elastomeric polymers contain a plurality of pendant 2-oxazolinyl groups of the formula (cf. IUPAC Rules B-1.2) 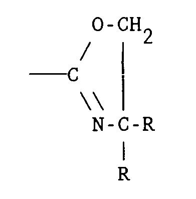
where R is independently a hydrogen atom or an aliphatic group of up to 4 carbon atoms, which oxazolinyl groups are attached directly to the elastomeric polymer, or are attached indirectly through a bridging group. The oxazoline-modified elastomeric polymers are produced by reaction of the corresponding polymers having pendant carboxylic acid groups with an alkanolamine reactant, followed by dehydration/cyclization (condensation) to produce the 2-oxazolinyl group.

A number of methods are known in the art for preparing elastomeric polymers having pendant carboxylic acid functionality, which polymers are suitable for condensation in the present invention.

In one modification, suitably functionalized elastomeric polymers may be prepared by incorporating the moiety of a functionalized monomer into an otherwise elastomeric polymer structure. For example, random copolymers and block copolymers containing a pendant carboxylic acid or ester group can be prepared by incorporation of an α,β-ethylenically unsaturated carboxylic acid or ester as a monomer during elastomer preparation. Such elastomeric polymers are illustrated by butadiene-acrylic acid copolymers, prepared by bulk polymerization of 1,3-butadiene and acrylic acid using a benzoylperoxide catalyst, as described in Polymer Bulletin 1986, 16, 35-41. In a polymer prepared from an unsaturated carboxylic acid ester monomer, the resulting pendant ester group is converted to a pendant carboxylic acid group by hydrolysis after preparation of the polymer.

In an alternate modification, elastomeric polymers can be prepared wherein the terminal group or end-cap of the polymer chain is a carboxylic acid functionality. Such polymers are obtained, for example, from anionically polymerized elastomers prepared with an organoalkali metal catalyst such as an alkyllithium initiator. The alkyllithium initiator is first used in an anionic solution polymerization of ethylenically unsaturated monomers to prepare an elastomeric polymer having lithium atoms on the ends of the polymer chains. The lithium atoms on the ends of the polymer chains are then contacted with carbon dioxide, followed by protonation to provide polymers having terminal carboxylic acid functionality. Such a process is well known in the art.

Alternatively, in a more preferred embodiment, the elastomeric polymers having pendant carboxylic acid functionality can be prepared by introducing carboxylic acid functionality onto a non-functionalized elastomeric base polymer.

A number of methods are known in the art which serve to functionalize an otherwise hydrocarbon polymer and these methods are suitably employed to introduce carboxylic acid functionality onto the base elastomeric polymer. In one modification, carboxylic acid groups are introduced directly onto carbon atoms of monomers which form a portion of the polymer by consecutive processes of metallation, carboxylation and acidification. This process of metallation is known in the art, being described more fully in Trepka, U.S. 4,145,298. The carboxylation process which is applied to the metallated elastomeric polymer is described more fully in U.S. 4,145,490, U.S. 3,976,628 and published European Patent Application 215,501.

In an alternate modification, the carboxylic acid-modified elastomeric polymers from which the oxazoline-modified elastomeric polymers of the invention are produced are those polymers wherein the carboxylic acid function is attached to a monomer which forms a portion of the elastomeric polymer indirectly through a bridging group. Such carboxylic acid-modified polymers are typically produced by employing the carbon-carbon unsaturation of aliphatic portions of the polymer, or carbon atoms adjacent thereto, as active sites for introduction of the carboxylic acid group. One conventional type of this process involves, in effect, the addition of the elements of a mercaptocarboxylic acid across a carbon-carbon double bond of the aliphatic portion of the elastomeric polymer. This unsaturation reacts with for instance thioglycolic acid according to the following simplified reaction scheme 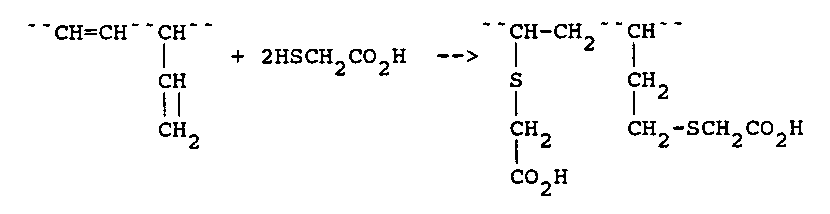
wherein the wavy lines indicate unspecified portions of the elastomeric polymer. The mercaptocarboxylic acid addition is well known in the art and is described by Calhoun et al, U.S. 3,052,657. A specific example of this process as applied to an elastomeric polymer is shown by published Japanese Patent Application 54,050,590. The process as is apparent serves to introduce carboxylic acid groups attached to the elastomeric polymer by a connecting group, i.e., a -SCH₂- group and will introduce a plurality of such groups depending in part on the degree of carbon-carbon unsaturation in the polymer.

An alternate process of introducing pendant carboxylic acid groups or precursors thereof onto the elastomeric polymer is to graft acid monomers onto the aliphatic portion of the polymer. In a generally preferred process, elastomeric polymers having carbon-carbon unsaturation in the aliphatic portion thereof are reacted with a maleic acid compound to form what is commonly referred to as a maleated polymer. By way of illustration, the production of maleated elastomeric polymer takes place according to the following simplified reaction schemes, employing maleic anhydride as the maleic acid compound,
a) to main chain unsaturation 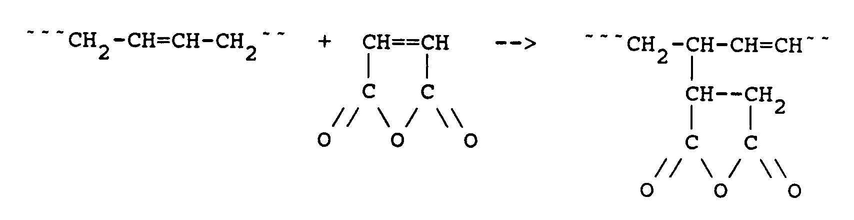
b) to vinyl unsaturation 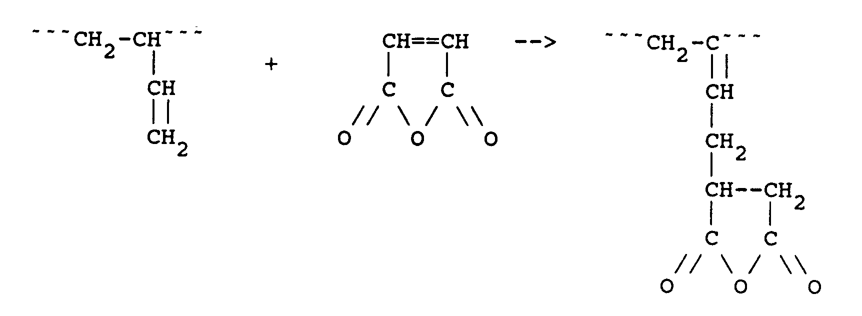 wherein the wavy lines represent unspecified portions of the elastomeric polymer.

The production of these maleic acid compound-modified elastomeric polymers is well known in the art. Disclosures of such processes, now conventional, are found in U.S. 4,292,414; U.S. 4,427,828; U.S. 4,033,888; U.S. 4,628,072; U.S. 4,659,970 and U.S. 4,657,921. Other related processes are described in U.S. 4,578,429 and U.S. 4,670,173.

The extent of the above-described metallation/carboxylation, mercaptocarboxylic acid addition or maleation reaction is variable and depends on a number of factors as previously described, including the degree of carbon-carbon unsaturation present in the aliphatic or aromatic portions of the elastomeric polymer. Although the processes of introducing carboxylic acid functionality are operable over a wide range of carbon-carbon unsaturation, best results are obtained when no more than 25% and preferably no more than 5% of the monomeric units present in the aliphatic portion of the elastomeric polymer contain carbon-carbon unsaturation. Methods are available for obtaining a base elastomeric polymer with a limited degree of aliphatic carbon-carbon unsaturation.

Preferably, the elastomeric polymer to be functionalized is a modified block copolymer which has been selectively hydrogenated. The preferred block copolymer base polymers suitable for selective hydrogenation are thermoplastic elastomers characterized by at least one block of at least predominantly polymerized vinyl aromatic hydrocarbon (A block) and at least one block of at least predominantly polymerized conjugated alkadiene (B block).

The vinyl aromatic hydrocarbon useful as the precursor of the A blocks has a vinyl group, i.e., a -C=CH₂ group, attached directly to an aromatic ring and has up to 12 carbon atoms inclusive. Preferred vinyl aromatic hydrocarbons are styrene and styrene homologues such as those of the formula 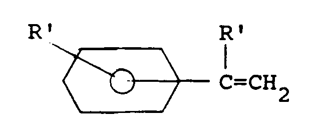
wherein R′ independently is a hydrogen atom or an alkyl group of up to 4 carbon atoms inclusive. Illustrative of such vinyl aromatic hydrocarbons are styrene, p-methylstyrene, p-ethylstyrene, m-propylstyrene, alpha-methylstyrene, alpha-ethylstyrene and alpha,4-dimethylstyrene. Styrene and alpha-methylstyrene are a preferred class of such vinyl aromatic hydrocarbons and especially preferred is styrene.

Each B block of the block copolymer independently is a block of at least predominantly polymerized alkadiene. The alkadienes useful as the predominant precursor for a B block are conjugated alkadienes of up to 8 carbon atoms such as those of the formula 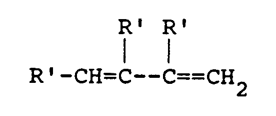
wherein R′ has the previously stated significance. Illustrative of such alkadienes are 1,3-butadiene (butadiene), 2-methyl-1,3-butadiene (isoprene), 2,3-dimethyl-1,3-butadiene, 1,3-pentadiene (piperylene), 1,3-octadiene and 2-methyl-1,3-hexadiene. Preferred alkadienes are butadiene and isoprene, particularly butadiene.

These block copolymers are well known in the art and the characterization and preparation of such polymers are illustrated by U.S. 3,251,905, U.S. 3,390,207, U.S. 3,598,887, U.S. 4,219,627, U.S. 4,408,357, U.S. 4,497,748 and U.S. 4,426,495.

The block copolymers most useful as precursors of the functionalized elastomeric polymers are preferably linear polymers of the following types:
polystyrene-polybutadiene (SB), and
polystyrene-polyisoprene (SI),
polystyrene-polybutadiene-polystyrene (SBS), and
polystyrene-polyisoprene-polystyrene (SIS),
poly(alpha-methylstyrene)-polybutadiene-poly(alpha-methylstyrene), and
poly(alpha-methylstyrene)-polyisoprene-poly(alpha-methylstyrene).
Block copolymers of the SBS type are particularly preferred. These block copolymers are now conventional and a number are commercial, for instance as KRATON (trademark) Thermoplastic Rubber.

To prepare the elastomeric polymers of limited aliphatic unsaturation which are functionalized to the carboxylic acid modified elastomeric polymers, the base block copolymers are selectively hydrogenated by conventional methods illustrated by for instance U.S. 3,113,986 and U.S. 4,226,952. The selectively hydrogenated block copolymers of these types are also well known in the art with a number being commercial. For example, certain of the selectively hydrogenated block copolymers are marketed as KRATON G (trademark) Thermoplastic Rubber.

The selectively hydrogenated block copolymers are reacted according to the processes described above to introduce carboxylic acid functionality into the elastomeric polymer. Although the polymers are suitably metallated/carboxylated or are reacted with mercaptocarboxylic acids to introduce pendant carboxylic acid groups, the preferred method of introducing functionality is through a maleation process as described above.

The extent of maleation of the preferred selectively hydrogenated block copolymers will depend in part on the residual unsaturation of the aliphatic portion of the selectively hydrogenated block copolymer. In terms of the preferred polymers described above, sufficient maleation of the selectively hydrogenated block copolymer is necessary to prepare a carboxylated derivative containing an average of at least one carboxylic acid group or precursor thereof per elastomeric polymer. Preferably the carboxylated polymer will contain a plurality of at least 2 carboxylic acid groups per polymer. The process of the invention for preparing the novel heat-curable oxazoline-modified elastomeric polymer is suitably applied to any carboxylic acid-functionalized elastomeric polymer independent of the precise nature of the elastomeric polymer or the particular process by which it was produced so long as there is an average of at least two carboxylic acid groups (or the equivalent) per elastomeric polymer.

In general, the process of the invention for preparing the novel oxazoline-modified elastomeric polymers comprises reaction of the carboxylic acid-modified elastomeric polymer with an alkanolamine reactant of the formula HO-CH₂-CR₂-NH₂ wherein R independently is a hydrogen atom or an aliphatic group of up to 4 carbon atoms. When R is other than a hydrogen atom, R is a hydrocarbyl group containing only atoms of carbon and hydrogen or R is a substituted hydrocarbyl group containing additional atoms which are inert under the conditions of the condensation process, e.g., halogen atoms and particularly the middle halogen atoms chlorine or bromine. Preferably R is a hydrogen atom or an aliphatic hydrocarbyl group, particularly an alkyl group, and more particularly a methyl group. Illustrative alkanolamines which are suitably employed in the process of the invention are ethanolamine, 2-amino-1-propanol, 2-amino-2-methyl-1-propanol, 2-amino-2-methyl-1-hexanol and 2-amino-2-ethyl-1-butanol. The preferred alkanolamine reactant is 2-amino-2-methyl-1-propanol.

The carboxylic acid group-modified elastomeric polymer is converted to oxazoline-modified elastomer by adding the alkanolamine reactant to a solution of an acid-modified elastomeric polymer in an inert reaction diluent. A variety of reaction diluents, including ethers and N-alkylamides, are useful provided that the diluent will dissolve at least a portion of the reactants at reaction temperature and is inert to the reactants and the oxazoline product. It is particularly useful to employ as a reaction diluent, or as one component of a mixed reaction diluent, an aromatic hydrocarbon or other diluent with which water forms a low-boiling azeotrope. Toluene, xylene or ethylbenzene are suitable. By means of such an azeotrope, the water produced as a by-product of the condensation process is easily and efficiently removed during the condensation process. The use of an azeotrope-forming diluent is not required, however, and the water is usefully removed by other conventional methods such as extraction or absorption. Suitable reaction temperatures will be from 20°C to 200°C, preferably from 100°C to 200°C. Suitable reaction pressures are those which are sufficient to maintain the reaction mixture in the liquid phase at reaction temperature. Such pressures are typically up to 20 atmospheres but more often are from 0.8 atmosphere to 10 atmospheres. It is often useful to conduct the reaction at the reflux temperature of the reaction mixture at ambient pressure.

The quantity of alkanolamine reactant to be employed will vary to some extent depending upon the degree to which the elastomeric polymer has been functionalized and the extent to which it contains pendant carboxylatic acid groups. In general, quantities of alkanolamine reactant from 1 mole to 100 moles per mole of carboxylic acid-modified elastomeric polymer are satisfactory. Amounts of alkanolamine reactant from 1 mole to 10 moles per mole of modified elastomeric polymer are preferred. Subsequent to reaction, the oxazoline-modified elastomeric polymer is recovered by conventional methods such as selective extraction or precipitation with a non-solvent.

The oxazoline-modified elastomeric polymer products are characterized as elastomeric polymers having a plurality of pendant oxazolinyl groups attached directly to the polymer or indirectly through linking groups. In a reaction of an alkanolamine with a maleated, selectively hydrogenated block copolymer, the elastomeric polymer products are represented as follows 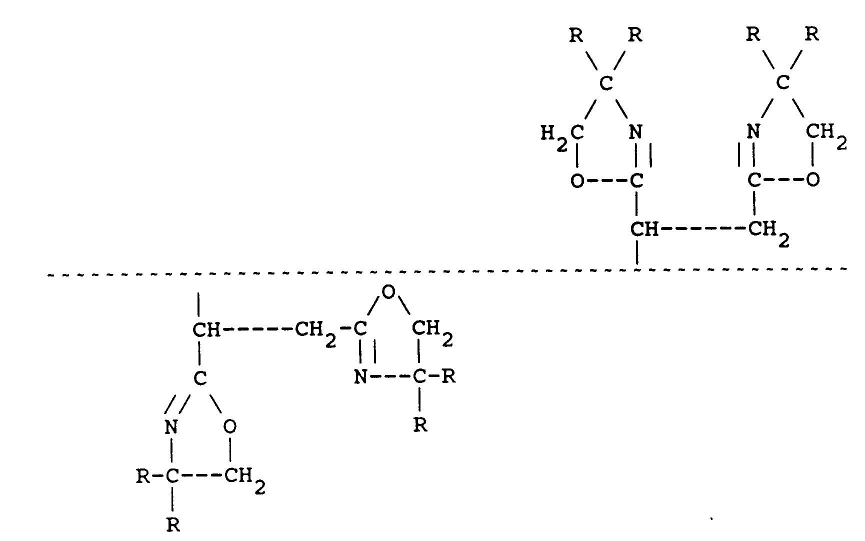
wherein the wavy line represents unspecified portions of the polymer and R has the previously stated meaning. The precise nature of that substituent or any linking groups in general are of little or no significance in so far as the properties of the oxazoline-modified elastomeric polymer is concerned so that the polymer is fairly described as an elastomeric polymer having pendant 2-oxazolinyl groups.

In an alternate embodiment of the invention, as described above, the carboxylic acid-modified elastomeric polymer is a metallated/carboxylated, selectively hydrogenated block copolymer of the SEBS type. When this preferred polymer is reacted with an alkanolamine reactant, depiction of the oxazoline-modified polymer is illustrated by the following 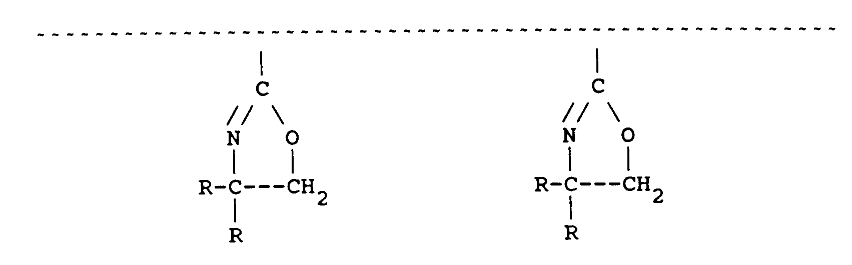
wherein R has the previously stated meaning and the wavy lines represent unspecified portions of the elastomeric polymer. The oxazolinyl groups are attached to or pendant from aliphatic portions of the elastomeric polymer or from aromatic portions of the polymer as will be apparent from the above description of how and where carboxylic acid groups are introduced onto the elastomeric polymer.

The oxazoline-modified elastomeric polymers of the invention offer utilities associated with the elastomeric polymers from which they are produced. The polymers are useful in a number of moulding applications including the moulding of gears and valves and have additional utility in the production of adhesives. Those polymers of relatively low carbon-carbon aliphatic unsaturation offer good resistance to oxidative and chemical degradation in applications where shaped articles are desired and moreover exhibit good paintability and printability. However, unlike most conventional elastomeric polymers the oxazoline-modified elastomeric polymers of the invention are curable or crosslinkable when heated to temperatures above 200°C in the presence of many conventional curing agents, particularly curing agents which are at least difunctional active hydrogen compounds. Particularly useful are dibasic acids and acid anhydrides, both aliphatic and aromatic. The specific nature and the use of such curing agents is well known in the art, particularly in the art of curing epoxy resins. The resulting products, processed by conventional methods employed for thermoset resins, offer the rigidity, toughness and solvent resistance normally associated with crosslinked materials.

The invention is further illustrated by the following Examples.

### Example I

The preparation of the novel 2-oxazoline-modified elastomers of the invention is illustrated by using KRATON G 1652 (trademark) . This elastomer is a polystyrene-polybutadiene-polystyrene block copolymer which has been selectively hydrogenated and extruder maleated with maleic anhydride to introduce 0.12 milliequivalents of grafted maleic anhydride per gram of polymer, primarily in the aliphatic portion of the block copolymer. The polymer is acidified to provide pendant free carboxylic acid groups and then dissolved in xylene. To the resulting solution is added 2-amino-2-methyl-1-propanol in a quantity at least approximately equivalent to the free carboxylic acid group present in the elastomeric polymer. The mixture is then heated to reflux and maintained at reflux until the water formed by the reaction is removed as an azeotrope with the xylene. Finally, the 2-oxazolinyl-modified elastomer is recovered from the resulting mixture as a precipitate by the addition of methanol.

### Example II

When the product of Example I is heated to a sufficiently elevated temperature with an equal proportion by weight of the carboxylated elastomer in the acid form, a crosslinked resin is obtained which is insoluble in xylene. Similar results are obtained if the product of Example I is heated with a benzyl chloride.

## Claims

1. An elastomeric polymer which is a natural rubber, polybutadiene, polyisoprene, polychloroprene, an EPDM rubber or a block copolymer of a vinyl aromatic compound and a conjugated alkadiene, which elastomeric polymer contains pending 2-oxazolinyl groups.

2. The elastomeric polymer of claim 1, wherein the 2-oxazolinyl group is of the formula 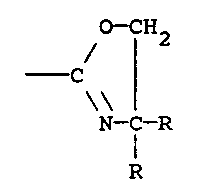 wherein R independently is a hydrogen atom, or an aliphatic group of up to 4 carbon atoms.

3. The elastomeric polymer of claim 2, wherein R is a methyl group.

4. The elastomeric polymer of anyone of claims 1 to 3, wherein the elastomeric polymer is an EPDM rubber.

5. The elastomeric polymer of anyone of claims 1 to 3, wherein the elastomeric polymer is a selectively hydrogenated block copolymer of at least one block of at least predominantly polymerized vinyl aromatic hydrocarbon and at least one block of at least predominantly polymerized alkadiene.

6. The elastomeric polymer of anyone of claims 1 to 5, wherein the pendant oxazolinyl group is attached to the elastomeric polymer through a ―SCH₂- group.

7. The elastomeric polymer of anyone of claims 1 to 5, wherein the pendant 2-oxazolinyl group is attached to the elastomer polymer through a pendant group derived from a carboxylic acid group of the formula

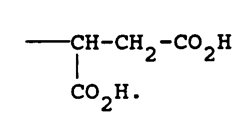

8. A process for preparing the elastomeric polymer of anyone of claims 1 to 7, which comprises contacting an elastomeric polymer having at least one pendant carboxylic acid group with an alkanolamine of the formula HO-CH₂-CR₂-NH₂,, wherein R independently is a hydrogen atom, or an aliphatic group of up to 4 carbon atoms, followed by dehydration/cyclization.

9. The process of claim 8, wherein the alkanolamine is 2-amino-2-methyl-1-propanol.

10. The process of claim 8 or 9, wherein the amount of alkanolamine is 1 to 10 mole per mole of elastomeric polymer having at least one pendant carboxylic acid group.

11. The process of anyone of claims 8 to 10, wherein the alkanolamine is added to a solution of the elastomeric polymer having at least one pendant carboxylic acid group in an inert diluent.

12. A process of curing the elastomeric polymer of anyone of claims 1 to 7, wherein the elastomeric polymer is heated to temperatures above 200 °C in the presence of a conventional curing agent.

13. A product comprising a cured elastomeric polymer prepared in accordance with the process of claim 12.

## Patentansprüche

1. Ein elastomeres Polymer, welches ein natürlicher Gummi, Polybutadien, Polyisopren, Polychlorpren, ein EPDM-Gummi oder ein Blockcopolymer einer vinylaromatischen Verbindung und eines konjugierten Alkadiens ist, welches elastomere Polymer daran hängende 2-Oxazolinylgruppen enthält.

2. Das elastomere Polymer von Anspruch 1, in welchem die 2-Oxazolinylgruppe die Formel 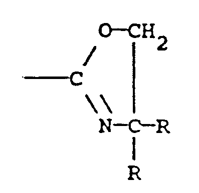 hat, in welcher R unabhängig ein Wasserstoffatom oder eine aliphatische Gruppe von bis zu 4 Kohlenstoffatomen ist.

3. Das elastomere Polymer von Anspruch 2, in welchem R eine Methylgruppe ist.

4. Das elastomere Polymer gemäß einem der Ansprüche 1 bis 3, in welchem das elastomere Polymer ein EPDM-Gummi ist.

5. Das elastomere Polymer gemäß einem der Ansprüche 1 bis 3, in welchem das elastomere Polymer ein selektiv hydriertes Blockcopolymer aus wenigstens einem Block von wenigstens vorherrschend polymerisiertem vinylaromatischen Kohlenwasserstoff und wenigstens einem Block von wenigstens vorherrschend polymerisiertem Alkadien ist.

6. Das elastomere Polymer gemäß irgendeinem der Ansprüche 1 bis 5, in welchem die daran hängende Oxazolinylgruppe an das elastomere Polymer durch eine ―SCH₂-Gruppe gebunden ist.

7. Das elastomere Polymer gemäß einem der Ansprüche 1 bis 5, in welchem die daran hängende 2-Oxazolinylgruppe an das elastomere Polymer durch eine daran hängende Gruppe gebunden ist, welche von einer Carbonsäuregruppe der Formel 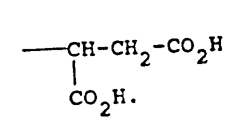 abgeleitet ist.

8. Ein Verfahren zur Herstellung des elastomeren Polymers gemäß einem der Ansprüche 1 bis 7, umfassend das in-Berührung-bringen eines elastomeren Polymers mit wenigstens einer daran hängenden Carbonsäuregruppe mit einem Alkanolamin der Formel HO-CH₂-CR₂-NH₂,, in welcher R unabhängig ein Wasserstoffatom oder eine aliphatische Gruppe von bis zu 4 Kohlenstoffatomen ist, gefolgt von Dehydratisierung/Zyklisierung.

9. Das Verfahren gemäß Anspruch 8, in welchem das Alkanolamin 2-Amino-2-methyl-1-propanol ist.

10. Das Verfahren gemäß Anspruch 8 oder 9, in welchem die Menge an Alkanolamin 1 bis 10 Mol pro Mol elastomeren Polymers mit wenigstens einer daran hängenden Carbonsäuregruppe ist.

11. Das Verfahren gemäß einem der Ansprüche 8 bis 10, in welchem das Alkanolamin einer Lösung des elastomeren Polymers mit wenigstens einer daran hängenden Carbonsäuregruppe in einem inerten Verdünnungsmittel zugespeist wird.

12. Ein Verfahren zum Härten des elastomeren Polymers aus einem der Ansprüche 1 bis 7, in welchem das elastomere Polymer auf Temperaturen über 200°C in Gegenwart eines herkömmlichen Härtungsmittels erwärmt wird.

13. Ein Erzeugnis, welches ein gemäß dem Verfahren von Anspruch 12 hergestelltes elastomeres Polymer umfaßt.

## Revendications

1. Un polymère élastomère qui est un caoutchouc naturel, un polybutadiène, un polyisoprène, un polychloroprène, un caoutchouc EPDM ou un copolymère séquencé d'un composé vinyl-aromatique et d'un alkadiène conjugué, ce polymère élastomère renfermant des groupes 2-oxazolinyle pendants.

2. Le polymère élastomère de la revendication 1, dans lequel le groupe 2-oxazolinyle présente la formule 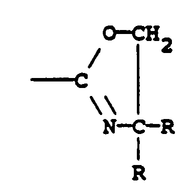 dans laquelle R représente indépendamment un atome d'hydrogène ou un groupe aliphatique ayant jusqu'à 4 atomes de carbone.

3. Le polymère élastomère de la revendication 2, dans lequel R est un groupe méthyle.

4. Le polymère élastomère de l'une quelconque des revendications 1 à 3, dans lequel le polymère élastomère est un caoutchouc EPDM.

5. Le polymère élastomère de l'une quelconque des revendications 1 à 3, dans lequel le polymère élastomère est un copolymère séquencé, sélectivement hydrogéné, d'au moins une séquence d'au moins un hydrocarbure vinylaromatique polymérisé de façon prédominante et d'au moins une séquence d'au moins un alkadiène polymérisé de façon prédominante.

6. Le polymère élastomère de l'une quelconque des revendications 1 à 5, dans lequel le groupe oxazolinyle pendant est fixé au polymère élastomère par l'intermédiaire d'un groupe -SCH₂-.

7. Le polymère élastomère de l'une quelconque des revendications 1 à 5, dans lequel le groupe 2-oxazolinyle pendant est fixé au polymère élastomère par l'intermédiaire d'un groupe pendant dérivé d'un groupe acide carboxylique de la formule

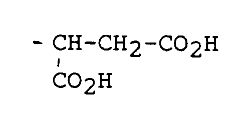

8. Un procédé pour préparer le polymère élastomère de l'une quelconque des revendications 1 à 7, procédé selon lequel on met en contact un polymère élastomère ayant au moins un groupe acide carboxylique pendant avec une alcanolamine de la formule HO-CH₂-CR₂-NH₂, dans laquelle R représente indépendamment un atome d'hydrogène ou un groupe aliphatique ayant jusqu'à 4 atomes de carbone, suivi par une déshydration/cyclisation.

9. Le procédé de la revendication 8, dans lequel l'alcanolamine est du 2-amino-2-méthyl-1-propanol.

10. Le procédé de la revendication 8 ou 9, dans lequel la quantité d'alcanolamine est de 1 à 10 moles par mole de polymère élastomère ayant au moins un groupe acide carboxylique pendant.

11. Le procédé de l'une quelconque des revendications 8 à 10, dans lequel l'alcanolamine est ajoutée à une solution du polymère élastomère ayant au moins un groupe acide carboxylique pendant dans un diluant inerte.

12. Un procédé de durcissement d'un polymère élastomère de l'une quelconque des revendications 1 à 7, dans lequel le polymère élastomère est chauffé jusqu'à des températures supérieures à 200°C en présence d'un agent durcissant classique.

13. Un produit comportant un polymère élastomère durci, préparé selon le procédé de la revendication 12.
